**Europäisches Patentamt**

**European Patent Office**

**Office européen des brevets**

(11) Veröffentlichungsnummer : **0 020 901**
**B1**

# (12) EUROPÄISCHE PATENTSCHRIFT

(45) Veröffentlichungstag der Patentschrift :
13.10.82

(21) Anmeldenummer : 80101943.1

(22) Anmeldetag : 10.04.80

(51) Int. Cl.³ : **E 04 F 13/00**, E 04 B 1/76,
D 06 N 7/00, D 21 H 1/18,
B 32 B 15/12

(54) **Wärmereflektierende Tapete oder Wandbelag.**

(30) Priorität : 10.04.79 DE 2914436
17.07.79 DE 2928848

(43) Veröffentlichungstag der Anmeldung :
07.01.81 (Patentblatt 81/01)

(45) Bekanntmachung des Hinweises auf die Patenterteilung : 13.10.82 Patentblatt 82/41

(84) Benannte Vertragsstaaten :
AT BE CH DE FR GB IT LI LU NL SE

(56) Entgegenhaltungen :
CH A 516 053
DE A 2 013 001
DE A 2 828 576
DE C 1 000 146

(73) Patentinhaber : Pusch, Günter, Dr.-Ing.
Bannholzweg 12
D-6903 Neckargemünd (DE)

(72) Erfinder : Aisslinger, Dieter E.
Heidenstrasse 54
D-6222 Geisenheim (DE)
Erfinder : Pusch, Klaus-Werner
Bannholzweg 10
D-6903 Neckargemünd (DE)
Erfinder : Hoffmann, Alexander, Dipl.-Phys.
Heidelberger Strasse 24
D-6901 Mauer (DE)
Erfinder : Pusch, Günter, Dr.-Ing.
Bannholzweg 12
D-6903 Neckargemünd (DE)

(74) Vertreter : Paul, Dieter-Alfred, Dipl.-Ing.
Erftstrasse 82
D-4040 Neuss 1 (DE)

## Wärmereflektierende Tapete oder Wandbelag

Die Erfindung bezieht sich auf eine wärmereflektierende Tapete bzw. Wandbelag mit einem gegebenenfalls mit Kleber versehenen Trägermaterial aus Papier oder Kunststoff, das ein- oder beidseitig mit einer dünnen Metallschicht bedampft und mit einem überzug abgedeckt ist, der im Infrarotspektralbereich transparent, im sichtbaren Spektralbereich jedoch farbig erscheint. Derartige Wandbeläge finden im Bauwesen oder in der Heizungstechnik Anwendung.

Aus dem deutschen Gebrauchsmuster 73 43 047 ist ein Tapezierstreifen bekannt, bei dem eine Aluminiumschicht auf eine Hartschaumschicht aufgebracht ist. Zur Verschönung der Außenseite der Aluminiumschicht kann diese musterartig geprägt sein und gleichzeitig kann die Außenseite der Aluminiumschicht, um eine ausreichende Schmutzabweisung zu erreichen, mit einer Schutzlackierung versehen sein.

In der deutschen Patentschrift 677 123 ist eine Metalltapete beschrieben, bei der zur besseren Feuchtigkeitsdurchlässigkeit die Metalloberschicht sowie die hiermit verbundene Papierzwischenschicht übereinstimmend gelocht ist, während die beiden gelochten Verbundschichten auf einer weiteren ungelochten Papierunterschicht aufgebracht waren.

Aus der deutschen Patentschrift 800 857 ist eine Metalltapete der vorstehend genannten Art bekannt, die zusätzlich mit einer sehr dünnen Lackschicht überzogen war, die auch in beliebigen Tönen gefärbt sein kann.

Den bekannten Tapeten haften jedoch die gemeinsamen Nachteile an, daß sie keine optimale Rückstrahlung der Raumwärme ermöglichen, wenn sie mit Farben versehen sind. Wird jedoch auf die Metallschicht keine Farbe aufgebracht, so läßt sich feststellen, daß diese blank wirkenden metallischen Oberflächen für die Taptenausgestaltung normaler Wohnräume aus ästhetischen Gründen nicht akzeptiert werden.

Aus der DE-A-19 55 953 bzw. der CH-A-516 053 ist ein für Auskleidung von Wänden verwendbares wärmeisolierendes Material bekannt, bei dem auf ein Trägermaterial eine dünne Metallschicht mit einer Schichtdicke zwischen 3 und 30 nm aufgedampft ist. Die Metallschicht ist mit einem dünnen überzug mit einer Dicke zwischen 1 und 5 $\mu$m überzogen. Besteht dieser überzug aus einem im sichtoptischen und infraroten Wellenlängenbereich durchsichtigen Material, so ergibt sich zwar eine gute Reflexion von Wärmestrahlung, jedoch besitzt der gesamte Wandbelag ein metallisches Aussehen, was nicht erwünscht ist. Wird jedoch der überzug eingefärbt, so kann eine selektive Absorption bzw. Reflexion am Isoliermaterial unterstützt werden, so daß das Isoliermaterial im sichtbaren Spektralbereich farbig, im Infrarotspektralbereich noch — wenn auch eingeschränkt — durchlässig erscheint. Diese Einfärbung verhindert jedoch einen wirksamen Korrosionsschutz der darunterliegenden dünnen Metallschicht, und es wird wesentlich die Haftung des überzugs auf der Metallschicht herabgesetzt. Weiterhin besteht aus sicherheitstechnischer Sicht bei einem solchen Isoliermaterial die Gefahr, daß die durchgehende Metallschicht mit spannungsführenden Leitungen in Kontakt kommt, wodurch eine erhebliche Verletzungsgefahr bei Berührung des Wandbelags gegeben ist.

Aus der US-Patentschrift 3 476 629 ist es bekannt, ein metallisiertes oder mit einer Metallfolie belegtes Gewebe dadurch porös zu machen, daß das Gewebe mit der Metallschicht über einen Kalander laufengelassen wird, auf dem die Metallschicht in eine Vielzahl von Teilen zerrissen wird.

Aus der DE-A-28 28 576 ist eine wärmereflektierende, geschichtete Mehrschichtbahn bekannt, bei der auf einem opaken Trägermaterial eine transparente synthetische Harzschicht und darauf eine IR-Strahlen reflektierende, jedoch im sichtbaren Bereich durchlässige Schicht aus einem Halbleitermaterial aufgebracht ist. Das Problem einer farbigen Gestaltung eines wärmereflektierenden Wandbelags ist bei diesem bekannten Wandbelag dadurch gelöst, daß das Trägermaterial in der gewünschten Weise farbig gestaltet wird. In diesem Fall muß jedoch sodann die außenliegende, Infrarotstrahlung reflektierende Metallschicht durchsichtig sein. Dies bringt es mit sich, daß als außenliegende Schicht, die einerseits Wärmestrahlung reflektiert, jedoch für sichtbares Licht transparent ist, aus einem halbleitenden Material hergestellt werden muß. Dieses Material ist äußerst teuer und es bringt zudem zusätzlich die Gefahr mit sich, daß der gesamte Wandbelag unter Spannung bzw. Strom gesetzt wird, sofern diese außenliegende Schicht mit einer spannungsführenden Leitung in Kontakt kommt.

Der vorliegenden Erfindung liegt deshalb die Aufgabe zugrunde, eine wärmereflektierende Tapete anzugeben, die sich mit verhältnismäßig niedrigen Kosten herstellen läßt, eine hohe thermische Reflexion aufweist, farblich ansprechend gestaltet werden kann und keine elektrische Leitfähigkeit besitzt. Dies wird erfindungsgemäß durch die Kombination der folgenden Merkmale erreicht :

a) auf dem Trägermaterial ist die Metallschicht, die dünner als 30 nm ist, aufgebracht,

b) auf der Metallschicht ist eine die Metallschicht vor Korrosion schützende und als Haftvermittler und/oder Primer dienende Schutzschicht von maximal einigen $\mu$m Dicke (d.h. bis zu 10 $\mu$m), vorzugsweise von etwa 0,5 $\mu$m Dicke, aufgebracht,

c) auf der Schutzschicht ist als Überzug eine ein IR-durchlässiges Bindemittel enthaltende Lackierung und/oder ein solches Bindemittel enthaltender Farbdruck von einigen 10 $\mu$m Dicke aufgebracht, die bzw. der im Wellenlängenbereich von 4 bis 20 $\mu$m weitgehend transparent ist,

im Wellenlängenbereich von 0,4 bis 0,8 μm jedoch farbig erscheint, und

d) die Metallschicht weist die Flächenleitfähigkeit der Metallschicht praktisch unwirksam machende Haarrisse auf.

Es ist bekannt, daß Metallschichten aufgrund der hohen Dichte an freien Elektronen elektromagnetische Strahlung bereits in Schichtstärken reflektieren, die wesentlich dünner als die Wellenlänge der Strahlung sind. Die Stärke der Reflexion korreliert mit dem Oberflächenwiderstand der Metallschicht und steigt für $1 \, \mu m < \lambda < 20 \, \mu m$ ab einem Oberflächenwiderstand von 2 Ohm pro Quadrat nicht mehr wesentlich an. Dies entspricht einer Schichtstärke von 14 nm bei Aluminium, dem am häufigsten verwendeten Aufdampfmetall. Um andere Metalle einerseits und Unregelmäßigkeiten der aufgedampften Schicht andererseits auch zu erfassen, wird die Schichtstärke bis zu 30 nm gewählt. Schichten mit größeren Schichtstärken sind zwar ebenfalls möglich, jedoch wird bei größeren Schichtdicken die Reflexion nicht mehr verbessert. Andererseits erfordern größere Schichtdicken mehr aufzudampfendes Material, was nur die Entstehungskosten unnötig erhöht.

Aufgrund der Wahl einer äußerst dünnen Metallschicht von einer Schichtstärke bis zu 30 nm wird einerseits gewährleistet, daß eine maximale Reflexion von thermischer Strahlung erhalten wird, andererseits die Gesamttapete bzw. Gesamtwandbelag durch die Metallschicht keineswegs merklich versteift wird, sondern wie üblich in bisher bekannten Tapten äußerst flexibel bleibt, so daß sich eine solche Tapete leicht verarbeiten läßt. Man erhält also bei maximalem Reflexionsvermögen einen minimalen Materialaufwand sowie eine Tapete, die sich in ihrem Verhalten beim Anbringen der Tapeten praktisch nicht von den bisher bekannten unterscheidet.

Bei einer über die angegebene hinausgehende Dicke der Metallschicht wäre darüberhinaus nicht mehr in ausreichendem Maße gewährleistet, daß die Schicht beim Walken und Rollen der Tapete bzw. des Wandbelages oder in einem gesonderten Streck- oder Verformungsprozeß des Trägermaterials in viele kleine Inseln zerrissen wird. Dies ist nämlich erforderlich, da eine solche Metallschicht zunächst eine bereits so hohe Leitfähigkeit für niederfrequente Wechselspannungen und Gleichspannung hat, daß eine hohe Gefährdung besteht, wenn ein Wandbelag, der damit ausgerüstet ist, versehentlich Kontakt zum Lichtnetz bekommt. Bei der erfindungsgemäßen Tapete bzw. Wandbelag wird deshalb zur Verhütung von elektrischen Kurzschlüssen die Trägerfolie nach dem Aufbringen der Metallschicht durch einen nachfolgenden Streck- oder Verformungsprozeß so gedehnt, daß aufgrund der hierbei gebildeten Haarrisse die Flächenleitfähigkeit der Metallschicht praktisch unwirksam wird, da die Metallschicht durch die Haarrisse in die dann äußerst kleinen Inseln zerreißt. Der Verformungsprozeß der Trägerfolie wird dabei vorzugsweise erst dann durchgeführt, wenn wenigstens die Schutzschicht auf die Metallschicht aufgebracht ist, da die Schutzschicht sehr dünn aufgetragen werden muß, was nach dem Verformungsprozeß schwierig ist. Verwendet man als Schutzschicht etwa eine Polyesterschicht, so liegt die elektrische Durchschlagfestigkeit über 100 V/μm. Es wird also eine Tapete erhalten, die eine optische Reflexion thermischer Strahlung ermöglicht, sich von bisher bekannten Tapeten in Bezug auf die Steifigkeit in keiner Weise unterscheidet und die gegenüber den bisher bekannten Metalltapeten nicht die Gefahr von elektrischen Kurzschlüssen mit sich bringt.

Durch das Zerreissen der dünnen Metallschicht wird zudem erreicht, daß die Tapete insgesamt wasserdampfdurchlässig wird. Eine solche Tapete wirkt deshalb, obwohl sie eine Reflexion der Wärmestrahlung von über 60 % aufweist, nicht als Dampfsperre, sondern läßt einen Feuchtigkeitsaustausch mit der dahinterliegenden Wand zu. Dadurch wird eine Raumatmosphäre wie auch bei den bisher üblichen Papiertapeten geschaffen.

Die Dicke der Schutzschicht, die auch als Haftvermittler bzw. Primer für die Lackierung oder den Farbdruck dient, wird so gewählt, daß sie zur Verhinderung der Korrosion der Metallschicht durch Mehrfachlackierung bzw. Mehrfachfarbdruck weitgehend porenfrei wird, aber über den gesamten, für die Wärmestrahlung wesentlichen Spektralbereich noch gut transparent ist.

Die Dicke der Schutzschicht sollte möglichst gering sein und nicht höher gewählt werden als eine λ/4-Schicht für die kürzeste relevante IR-Wellenlänge. Als besonders günstig hat sich eine Schichtdicke im Bereich von 0,5 μm erwiesen. Sie sollte einige μm nicht überschreiten. Die Schicht kann aus den gleichen Bindemittelmaterialien bestehen, wie sie für die Lackierung verwendet werden, zum Beispiel Polymethacrylat.

Der wesentliche Grund für das Anbringen eines Wandbelages ist die ästhetische Verbesserung der Wand oder Decke. Andere Funktionen, auch wenn diese, wie im vorliegenden Fall, erhebliche Qualitätsverbesserungen bzw. Einsparungen an Energie bringen, dürfen das Aussehen nicht oder nur kaum verschlechtern. Deshalb muß der zunächst metallisch wirkende Wandbelag mit einer frei wählbaren Farbe versehen werden können. Übliche Wandfarben sind aber auf Bindemittel aufgebaut, die andererseits kräftige IR-Absorptionsbanden aufweisen, andererseits in unkontrollierter Schichtstärke aufgebracht werden und Pigmente enthalten, deren Auswahl und Größe sich nur nach sichtoptischen Kriterien richtet. Daher wirken diese Farben im Bereich der Wärmestrahlung absorbierend, sozusagen schwarz und kalt. Um die hohe Wärmereflexion und damit die Behaglichkeit steigernde bzw. heizkostensparende Wirkung eines metallisierten Wandbelages zu erhalten, muß die mit der Lackierung bzw. dem Farbdruck aufgebrachte Farbe weitgehend transparent im Wellenlängenbereich von 4 bis 20 μm sein. Dies

wird erreicht durch Bindemittel, die in diesem Bereich keine oder nur unwesentliche Absorption aufweisen und in denen Farbstoffe gelöst sind, die ebenfalls in diesem Spektralbereich transparent sind. Als im IR-Bereich durchlässige Bindemittel sind beispielsweise Polymethylen aus Diazomethan, Niederdruckpolyäthylen, Hochdruckpolyäthylen, isomerisierter Kautschuk (Cyklokautschuk), verschiedene Polyamidsorten, niedrigmolekulare Acrylate usw. bekannt. Solche Schichten weisen in einer Schichtdicke von 10 μm unter 10 % IR-Gesamtabsorption auf.

Für die Färbung oder zum Bedrucken der die Lackierung bzw. den Farbdruck bildenden Bindemittelschicht sollen Farbstoffe verwandt werden, die im IR-Spektralbereich transparent sind, wie beispielsweise Alzarin-, Azo-Farbstoffe. Werden in der Bindemittelschicht zur Ausbildung einer Grundierung, Pigmentteilchen verwandt so sollten die Pigmentteilchen möglichst alle einen Durchmesser aufweisen, der kleiner als 1 μm ist. Als zum Beispiel brauchbar hat sich eine Größenverteilung von Pigmentteilchen erwiesen, bei der die Pigmentdurchmesser eine Gauß-Verteilung von 0,35 μm aufweisen. Das Verhältnis von Bindemittel zu Pigmentanteilen soll möglichst groß sein, und die Schichtdicke der Lackierung bzw. des Farbdrucks möglichst klein gewählt werden. Vorzugsweise wird eine solche Schichtdicke und ein solches Bindesmittel-Pigment Anteilverhältnis gewählt, daß im Mittel etwa zwei Lagen aus Pigmentteilchen im Bindemittel lose eingebettet sind, so daß sich eine hohe Transparenz der Lackierung bzw. des Farbdrucks im gesamten relevanten IR-Bereich ergibt. Als Pigmente können alle Stoffe verwandt werden, die selbst keine IR-Molekülresonanz aufweisen. Solche Resonanzen treten etwa bei organischen Substanzen mit Radikalen auf. Geeignet sind vorzugsweise anorganische Pigmentstoffe, wie zum Beispiel $TiO_2$.

Ein Zusammenwirken der farbigen Pigmente mit der Einfärbung durch lösliche Farbstoffe in der Bindemittelschicht nach dem vorher beschriebenen Gedanken kann zu verschiedenen Farbwirkungen im optischen Bereich führen, was eine weitgehende Freiheit in der Farbgestaltung ermöglicht. Von den Alternativen Lackierung-Farbdruck ist letzteres Verfahren vorzuziehen, damit die in der Tapetenfertigung gebräuchlichen Druckmethode weiter benutzt werden können. Die Sicht- bzw. Oberseite kann mit jedem gewünschten Dessin ausgeführt werden, ohne daß ein metallisches Aussehen wie bei den bisherigen thermisch reflektierenden Tapeten auftritt. Die Wirksamkeit der hohen Reflektivität im Bereich der Wellenlänge von 5 bis 25 μm wird durch diesen Druck nicht oder nur unwesentlich beeinträchtigt. Bei geeigneter Farbpigmentwahl und Farbbinderwahl können unterschiedliche Farbtöne und Muster in einem oder mehreren Druckvorgängen hergestellt werden.

Der vorliegenden Erfindung liegt weiterhin der Gedanke zugrunde, daß die erfindungsgemäße wärmereflektierende Tapete bzw. ein entsprechender Wandbelag nur dann von wirtschaftlichem sowie auch volkswirtschaftlichem Nutzen sein wird, wenn eine solche Tapete bzw. ein solcher Wandbelag von den Verbrauchern auch tatsächlich akzeptiert wird. Dies kann nur dadurch erreicht werden, wenn sich eine solche Tapete auch nach den herkömmlichen Tapeziermethoden, d.h. ohne besonderen Aufwand und ohne kostenintensive Verfahren wie beispielsweise ohne den Bedarf an einem Spezialkleber und somit preiswert verarbeiten läßt und wenn eine derartige Tapete bzw. ein derartiger Wandbelag mit den üblichen Druckdessins bedruckbar ist, so daß die vorliegenden Verbraucherwünsche befriedigt werden können. Diese Forderungen lassen sich insbesondere durch eine wärmereflektierende Tapete erfüllen, bei der das Trägermaterial aus einem dünnen Spezialpapier besteht, das mit einer dünnen Vorlackschicht bedeckt ist, auf die die Metallschicht, die Schutzschicht und die Lackierung bzw. der Farbdruck aufgebracht sind und bei der das Trägermaterial mittels eines Kaschierklebers auf einem Tapetenrohpapier aufgebracht ist. Eine solche Tapete läßt sich ohne weiteres nach herkömmlichen Tapeziermethoden verarbeiten. Weiterhin kann die Aussenseite der Tapete mit üblichen Druckdessins nach üblichen Druckverfahren bedruckt werden. Beide Eigenschaften machen die Tapete verbraucherfreundlicher, so daß sie auch wirtschaftlich benutzt wird und den gewünschten volkswirtschaftlichen Erfolg durch Einsparung von Heizenergie bringt. Dadurch das die Tapete mit den üblichen Druckdessins bedruckbar ist, wird eine Tapete geschaffen, die das gleiche Behaglichkeitsgefühl bewirkt wie die bisher bekannten Tapeten, jedoch zusätzlich den wesentlichen Vorteil mit sich bringt, daß bei der Raumerwärmung erhebliche Energie eingespart wird.

Sofern mit Farbdruck gearbeitet wird, sollte der Druckvorgang auf dem Spezialpapier ausgeführt werden, bevor der Kaschiervorgang mit dem Tapetenrohpapier erfolgt.

Um eine Verarbeitung der Tapete möglichst mit den bisher bekannten handwerklichen Maßnahmen zu ermöglichen, wird das Tapetenrohpapier in der Größenordnung von 100 bis 200 $g/m^2$, das metallbeschichtete dünne Spezialpapier in der Größenordnung von 10 bis 50 $g/m^2$ gewählt und die dazwischenliegende Papierkleberschicht in einer Dicke in der Größenordnung von 10 μm aufgetragen. Diese Schichtkombination wurde bereits mit Erfolg in der Praxis erprobt. Während der Entwicklung der erfindungsgemäßen Tapete wurde gefunden, daß die Kaschierschicht, die ursprünglich nur dem Zweck diente, das Tapetenrohpapier mit dem Trägermaterial zu verkleben, so ausgestaltet wird, daß sie zusätzlich die folgenden Funktionen übernimmt :

1. Die Kaschierschicht, die beispielsweise aus Polyvinylchlorid besteht, und bei der fertigen Tapete das Tapetenrohpapier mit dem Spezialpapier verbindet und in der mechanisch neutralen Zone liegt, wird vorzugsweise weich eingestellt, so daß die Kaschierschicht die Schmiegsamkeit und Flexibilität der Tapete beim Tapezieren fördert. Hierdurch wird es auch einem Heimwerker ohne Schwierigkeiten möglich, diese Tapete an den Wänden anzubringen.

2. Durch die geeignete chemische Zusammensetzung der Kaschierschicht wird die Brennbarkeit und Entflammbarkeit der Tapete verhindert.

3. Die Kaschierschicht übernimmt aufgrund der chemischen Zusammensetzung des Kaschierklebers einen Schutz gegen Korrosion der Metallschicht durch aus der Mauer emigrierende alkalische Bestandteile.

Werden Räume mit einer solchen Tapete ausgestattet, so wird der Kälteschleier (siehe Energiespartips Band 2, Veröffentlichung des Bay. Ministeriums für Wirtschaft und Verkehr vom Sept. 1978) vermieden.

Umfassungswände absorbieren entsprechend ihrer Oberflächentemperatur und ihrem Emissionsverhalten Körperwärme der Bewohner. Wird diese Wärme von den Tapeten reflektiert, ergibt sich im Raum ein Strahlungsklima, welches bei niedriger Raumtemperatur die Behaglichkeitsbedingungen erfüllt.

Diese Tatsache hat eine beachtliche wirtschaftliche Bedeutung und macht es möglich, die Luft- und Raumtemperatur geheizter Räume um mindestens 2 bis 5 °C ohne physiologische Beeinträchtigung abzusenken.

Nach allgemein zugänglichen Veröffentlichungen bringt die Senkung der Raumtemperatur um 3 °C eine für die heutige Zeit wichtige Einsparung von ca. 18 % Heizmaterial.

Ein besonders angenehmes Raumklima wird dadurch geschaffen, daß die Metallschicht so dünn ausgebildet wird, daß sie beim Walken und Rollen der Tapete zerreißt, wodurch die Tapete insgesamt wasserdampfdurchlässig wird.

Im folgenden soll die Erfindung anhand von in der Zeichnung dargestellten vorzugsweisen Ausführungsbeispielen näher erläutert werden. In der Zeichnung zeigen :

Figur 1 eine Schnittansicht durch eine erste Ausführungsform einer gemäß der Erfindung ausgebildeten Tapete,

Figur 2 eine Schnittansicht durch eine zweite Ausführungsform einer gemäß der Erfindung ausgebildeten Tapete und

Figur 3 eine Schnittansicht durch eine dritte Ausführungsform einer gemäß der Erfindung ausgebildeten Tapete.

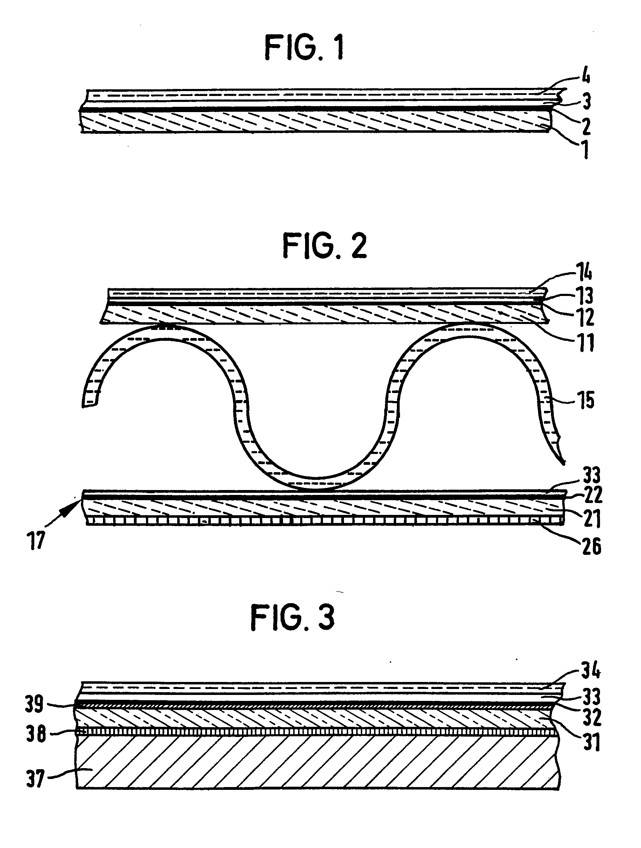

In Fig. 1 ist eine Tapete dargestellt, bei der auf Trägermaterial 1, das bevorzugt aus einem Papiermaterial besteht, eine sehr dünne Metallschicht 2 aufgebracht ist, die vorzugsweise aufgedampft wird. Das aus dem Trägermaterial 1 und der darauf aufgebrachten Metallschicht 2 gebildete Schichtmaterial wird vor der weiteren Verarbeitung vorzugsweise mechanisch etwa durch Prägen derart verarbeitet, daß die Metallschicht 2 in möglichst viele kleine Inseln zerreißt. Sodann wird auf die Metallschicht 2 eine dünne Lackschutzschicht 3 aufgebracht. Auf die freie Seite der Lackschutzschicht wird sodann die eigentliche Lackierung 4 aufgebracht, in der etwa in einem Bindemittel Farbstoffe gelöst oder in Form von Pigmenten dispergiert sein können.

Der diesem Wandbelag zugrundeliegende Gedanke besteht darin, daß die thermische Energie in einem Raum durch Reflexion an den Wänden im Raum erhalten bleibt und nicht die Wände erwärmt. Dieser Effekt kann nun noch dadurch unterstützt werden, daß das gemäß der Fig. 1 ausgebildete Tapetenschichtmaterial mit den Schichten 1 bis 4 auf eine geprägte, genoppte bzw. gewellte thermische Isolierbahn 15, die Lufträume einschließt und auf der Befestigungsseite eine Klebeschicht 26 trägt, aufgebracht wird, wie es in Fig. 2 dargestellt ist. Bei dieser Figur sind die in Fig. 1 gezeigten Schichten 1 bis 4 mit entsprechenden Bezugszeichen 11 bis 14 bezeichnet.

Der Träger 17, auf dem die Isolierbahn 15 aufgebracht ist, kann gemäß dem Ausführungsbeispiel in Fig. 2 auch aus einem Schichtmaterial bestehen, das aus einem Trägermaterial 21, einer darauf aufgebrachten Metallschicht 22 sowie einer Lackierung 23 besteht, wobei auf der freien Seite des Trägermaterials 21 die Klebeschicht 26 zum Aufbringen der Tapete oder des Wandbelages auf eine Wand vorgesehen ist. Das in Fig. 2 gezeigte System besteht somit praktisch aus zwei Lagen des Verbundes der Schichten 11 bis 14 bzw. 21 bis 23, die durch einen geprägten, genoppten oder gewellten Zwischenträger 15 aus Papier oder Kunststoff, welcher Luft- oder Gasräume miteinander einschließt, verbunden sind. Hierbei ist es selbstverständlich nicht notwendig, die inneren zur Wand weisenden Lagen dieses Verbundsystems mit der optisch wirkenden Lackierung 14 zu versehen. Unter diesen Gesichtspunkten wird außer der thermischen Reflexion auch die thermische Leitfähigkeit verhindert, so daß auch die Wärmeleitung in die Wand wesentlich abnimmt.

Durch die vorstehend beschriebene Tapete wird eine Tapete bzw. ein Wandbelag mit Farbstoffauflage geschaffen, die bzw. der eine Reflexion von IR-Strahlung von über 60 % aufweist. Die bisher bekannten Tapeten mit Farbstoffauflage wiesen höchstens eine Reflexion der IR-Strahlung von 5-10 % auf. .

In der Figur 3 ist eine Ausführungsform der erfindungsgemäßen Tapete dargestellt, bei der auf einem Tapetenrohpapier 37 über eine Kaschierkleberschicht 38 eine dünne Schicht eines Spezialpapiers 31 aufgebracht ist, das auf seiner der Kaschierkleberschicht 38 abgewandten Seite mit einer Vorlackschicht 39 bedeckt ist. Auf die Vorlackschicht bzw. Metallvorlackschicht ist eine dünne Metallschicht 32 etwa aus Aluminium aufgedampft. Auf die Metallschicht 32 ist eine dünne Lackschutzschicht 33 aufgebracht, auf die sodann die Lackierung 4 aufgebracht ist. Wie bereits ausgeführt wurde, kann die Lackierung durch einen ein- oder mehrfarbigen Farbdruck gebildet sein, wobei die Lackschutzschicht 33 als Primer für diesen Farbdruck dient.

Im Folgenden soll ein Ausführungsbeispiel für einen bevorzugten Tapetenaufbau angegeben werden, wobei die Schichtenfolge a-g von der Innenseite zur Tapetenaußenseite angegeben ist :

a) Unterlage aus Rohpapier mit einer Stärke von 150 g/m², 

b) Kaschierkleberschicht aus Polyvinylchlorid mit einer Dicke von 10 μm,

c) Spezialpapier aus einem naßfesten Papier mit einer Stärke von 50 g/m² und mit einer darauf aufgebrachten Lackschicht aus PVC-Copolymer mit einer Stärke von 1,5 μm,

d) Aluminium-Schicht mit 20 nm Stärke,

e) Lackschicht aus PVC-Copolymer mit einer Dicke von 0,5 μm,

f) Lackierungsschicht mit einer Bindemittelschicht aus Polymethacrylat mit 20 μm Dicke. In der Bindemittelschicht waren TiO₂-Pigmentteilchen dispergiert mit einem Durchmesser von kleiner als 1 μm. Das Bindemittel/Pigmentteilchen-Gewichtsverhältnis betrug 50 %.

g) Die Lackierungsschicht war mit einem in diese eindringenden Alizarin-Farbstoff mit 2 μm Dicke bedruckt.

**Ansprüche**

1. Wärmereflektierende Tapete oder Wandbelag mit einem gegebenenfalls mit Kleber versehenen Trägermaterial (1, 11, 21, 31) aus Papier oder Kunststoff, das ein- oder beidseitig mit einer dünnen Metallschicht (2, 12, 22, 32) bedampft und mit einem Überzug (4, 14, 34) abgedeckt ist, der im Infrarotspektralbereich transparent, im sichtbaren Spektralbereich jedoch farbig erscheint, gekennzeichnet durch die Kombination folgender Merkmale :

a) auf dem Trägermaterial (1, 11, 31) ist die Metallschicht (2, 12, 32), die dünner als 30 nm ist, aufgebracht,

b) auf der Metallschicht (2, 12, 32) ist eine die Metallschicht vor Korrosion schützende und als Haftvermittler und/oder Primer dienende Schutzschicht (3, 13, 33) von maximal einigen μm Dicke aufgebracht,

c) auf der Schutzschicht (3, 13, 33) ist als Überzug eine ein IR-durchlässiges Bindemittel enthaltende Lackierung (4, 14, 34) und/oder ein solches Bindemittel enthaltender Farbdruck von einigen 10 μm Dicke aufgebracht, die bzw. der im Wellenlängenbereich von 4 bis 20 μm weitgehend transparent ist, im Wellenlängenbereich von 0,4 bis 0,8 μm jedoch farbig erscheint, und

d) die Metallschicht (2, 12, 32) weist die Flächenleitfähigkeit der Metallschicht (2) praktisch unwirksam machende Haarrisse auf.

2. Tapete nach Anspruch 1, dadurch gekennzeichnet, daß die Lackierung (4) bzw. der Farbdruck in dem Bindemittel gelöste, nur im sichtbaren Licht absorbierende oder reflektierende Farbstoffe enthält.

3. Tapete nach Anspruch 1 oder 2, dadurch gekennzeichnet, daß die Lackierung (4) bzw. der Farbdruck in das Bindemittel eingebettete, in an sich bekannter Weise im sichtoptischen Bereich farbig wirkende Pigmente enthält.

4. Tapete nach einem der Ansprüche 1 bis 3, dadurch gekennzeichnet, daß in dem Farbdruck durch geeignete Farbpigmentwahl und Farbbinderwahl unterschiedliche Farbtöne und Muster in einem oder mehreren Druckvorgängen hergestellt sind.

5. Tapete nach einem der Ansprüche 1 bis 4, dadurch gekennzeichnet, daß das Trägermaterial (11) auf eine geprägte, genoppte bzw. gewellte, aus thermisch isolierendem Material bestehende Bahn (15), die Lufträume einschließt und auf der Befestigungsseite eine Klebschicht trägt, aufgebracht ist.

6. Tapete nach einem der Ansprüche 1 bis 5, dadurch gekennzeichnet, daß zwei oder mehrere Lagen aus jeweils einer Schichtanordnung gemäß Anspruch 1 jeweils durch geprägte, genoppte oder gewellte Zwischenträger (15) aus Papier oder Kunststoff, welche Luft oder Gasräume einschließen, miteinander verbunden sind.

7. Tapete nach einem der Ansprüche 1 bis 5, dadurch gekennzeichnet, daß das Trägermaterial (31) aus einem dünnen Spezialpapier besteht, das mit einer dünnen Vorlackschicht (39) bedeckt ist, auf die die Metallschicht (32), die Lackschutzschicht (33) bzw. Farbdruckschicht und die Lackierung (34) bzw. der Farbdruck aufgebracht sind, und daß das Trägermaterial (31) mittels einer Kaschierklebeschicht (38) auf ein Tapetenrohpapier (37) aufgebracht ist.

8. Tapete nach Anspruch 6, dadurch gekennzeichnet, daß das Tapetenrohpapier (37) in der Größenordnung von 100 bis 200 g/m², das mit der Vorlackschicht (39) einseitig beschichtete dünne Spezialpapier (31) in der Größenordnung von 10 bis 50 g/m² gewählt ist und die dazwischenliegende Kaschierklebeschicht (38) in der Größenordnung von 10 μm Dicke liegt.

9. Tapete nach Anspruch 7 oder 8, dadurch gekennzeichnet, daß die Kaschierklebeschicht (38) aus einem aufgrund seiner Elastizität die Papierschichtkombination aus dem Trägermaterial (31) und dem Tapetenrohpapier (37) flexibel machenden, die Entflammbarkeit vermindernden und die Metallschicht (32) gegen aus dem Mauerwerk austretende alkalische Bestandteile schützenden Kunststoffschicht besteht.

10. Tapete nach Anspruch 9, dadurch gekennzeichnet, daß die Kunststoffschicht aus Polyvinylchlorid besteht.

11. Tapete nach einem der Ansprüche 1 bis 10, dadurch gekennzeichnet, daß die Schutzschicht (3) eine Dicke von etwa 0,5 μm hat.

**Claims**

1. A heat-reflecting wall-paper on wall liner comprising an eventually adhesive-coated carrier material of paper or plastic provided on one or both sides with a thin vapour-deposited metal layer (2, 12, 22, 32) covered by a coating (4, 14, 34) which is transparent in the infrared spectral range, but appears coloured in the visible spectral range, characterized by the combination of the following features ;

a) the metal layer (2, 12, 32), which has a thickness of less than 30 nm, is deposited on the carrier material (1, 11, 31),

b) a protection layer (3, 13, 33) for protecting the metal layer (2, 12, 32) against corrosion and promoting adhesiveness and/or serving as a primer is applied onto the metal layer (2, 12, 32) in a thickness of maximum several μm,

c) a veneer (4, 14, 34) and/or a colour print containing an IR-permeable binder and being substantially transparent in the wavelength range of 4 to 20 μm, but appearing coloured in the wavelength range of 0,4 to 0,8 μm, is applied onto the protection layer (3, 13, 33) as said coating, and

d) the metal layer (2, 12, 32) comprises haircracks practically eliminating the surface conductivity of the metal layer (2, 12, 32).

2. A wall paper according to claim 1, characterized in that the veneer (4, 14, 34) or the colour print contains a colouring agent dissolved in the binder and absorbing or reflecting only in the visible light.

3. A wall paper according to claims 1 or 2, characterized in that the veneer (4, 14, 34) or the colour print contains pigments imbedded in the binder and in a per se known manner producing a colour effect within the visible light spectrum.

4. A wall paper according to one of claims 1 to 3, characterized in that the colour print comprises colour tones and patterns produced in one or more printing operations by suitable selection of colour pigments and binders.

5. A wall paper according to one of claims 1 to 4, characterized in that the carrier material (11) is applied onto an embossed, nap-patterned or corrugated web of thermally insulating material (15) enclosing air cavities and carrying an adhesive layer on its attaching face.

6. A wall paper according to one of claims 1 to 5, characterized in that two or more layers of one of the layer-disposal according to claim 1 are interconnected by means of embossed, nap-patterned of corrugated intermediate layers (15) of paper or plastic enclosing air or gas spaces.

7. A wall paper according to one of claims 1 to 5, characterized in that the carrier material (31) consists of a thin special paper covered with a thin primer veneer layer (39) onto which the metal layer (32), the veneer protection layer (33) or the colour print layer and the veneer (34) or the colour print are applied, and that the carrier material (31) is affixed to a wall paper base (37) by means of an adhesive lining (38).

8. A wall paper according to claim 7, characterized in that the wall paper base (37) is selected in a weight range of 100 to 200 g/m², the thin special paper (31) coated on one side with a primer veneer layer (39) is selected in the weight range of 10 to 50 g/m² and the adhesive lining lying (38) there between is in the thickness range of about 10 μm.

9. A wall paper according to claim 7 or 8, characterized in that the adhesive lining (38) consists of a plastic layer which is due to its elasticity, bestowing flexibility to the combination of paper layers, reducing combustibility or inflammability, respectively, due to its chemical composition, and protecting the vapour-deposited metal layer (32) from alkaline substances exuded by a wall.

10. A wall paper according to claims 9, characterized in that said plastic layer consists of polyvinyl chloride.

11. A wall paper according to one of claims 1 to 10, characterized in that the protection layer (3) has a thickness of about 0,5 μm.

**Revendications**

1. Papier peint ou revêtement mural réfléchissant la chaleur, comprenant un support (1, 11, 21, 31) de papier ou de matière synthétique muni le cas échéant d'un adhésif, enduit par métallisation unilatéralement ou bilatéralement d'une mince couche métallique (2, 12, 22, 32) et recouvert d'une couche (4, 14, 34) transparente dans la zone spectrale de l'infrarouge, mais colorée dans la zone spectrale visible, caractérisé par la combinaison des particularités suivantes :

a) la couche métallique (2, 12, 32), dont la minceur est inférieure à 30 nm, est appliquée sur le support (1, 11, 31) ;

b) sur la couche métallique (2, 12, 32), on dispose une couche protectrice (3, 13, 33) de quelques μm d'épaisseur au maximum, couche servant d'agent d'accrochage et/ou de première couche et protégeant la couche métallique contre la corrosion ;

c) sur la couche protectrice (3, 13, 33), on applique, comme couche de revêtement, un vernis (4, 14, 34) contenant un liant perméable à l'infrarouge et/ou une impression en couleurs contenant ce liant et d'une épaisseur de quelques 10 μm ; ce vernis ou cette impression est largement transparent dans la zone des longueurs d'ondes de 4 à 20 μm, mais est coloré dans la zone des longueurs d'ondes de 0,4 à 0,8 μm ; et

d) la couche métallique (2) présente des microcriques rendant pratiquement inefficace la conductibilité de cette couche métallique (2).

2. Papier peint selon la revendication 1, caractérisé en ce que le vernis (4) ou l'impression en couleurs contient des colorants dissous dans le liant et qui ne sont réfléchissants ou absorbants que dans la lumière visible.

3. Papier peint selon l'une quelconque des revendications 1 et 2, caractérisé en ce que le vernis (4) ou l'impression en couleurs contient des pigments enrobés dans le liant et agissant comme on le sait d'une manière colorée dans la zone optico-visuelle.

4. Papier peint selon l'une quelconque des revendications 1 à 3, caractérisé en ce que des teintes et des motifs différents sont formés dans l'impression en couleurs par un choix approprié de pigments et de liants colorés, et ce, selon un ou plusieurs procédés d'impression.

5. Papier peint selon l'une quelconque des revendications 1 à 4, caractérisé en ce que le support (11) est appliqué sur une bande (15) gaufrée, nopée ou ondulée, se composant d'une matière thermiquement isolante, renfermant des vides aérés et présentant une couche de colle sur la face de fixation.

6. Papier peint selon l'une quelconque des revendications 1 à 5, caractérisé en ce que deux ou plusieurs ensembles formés chacun d'une combinaison de couches suivant la revendication 1, sont reliés l'un à l'autre par des supports intermédiaires (15) de papier ou de matière synthétique, gaufrés, nopés ou ondulés et renfermant des vides gazeux ou aérés.

7. Papier peint selon l'une quelconque des revendications 1 à 5, caractérisé en ce que le support (31) se compose d'un mince papier spécial qui est recouvert d'une mince couche de mastic superficiel (39), sur laquelle sont déposés la couche métallique (32), la couche de vernis protectrice (33) ou la couche d'impression en couleurs et le vernis (34) ou l'impression en couleurs ; et en ce que le support (31) est appliqué, au moyen d'une couche de colle de doublage (38), sur un papier peint brut (37).

8. Papier peint selon la revendication 6, caractérisé en ce que le papier peint brut (37) a un poids d'un ordre de grandeur de 100 à 200 g/cm$^2$ ; en ce que le mince papier spécial (31), enduit unilatéralement de la couche de mastic superficiel (39), a un poids d'un ordre de grandeur de 10 à 50 g/m$^2$ ; et en ce que la couche de colle de doublage (38) se situant intermédiairement a une épaisseur d'un ordre de grandeur de 10 $\mu$m.

9. Papier peint selon l'une quelconque des revendications 7 et 8, caractérisé en ce que la couche de colle de doublage (38) se compose d'une couche de matière synthétique rendant flexible, en raison de son élasticité, la combinaison de couches constituée du support (31) et du papier peint brut (37), réduisant l'inflammabilité et protégeant la couche métallique (32) contre les constituants alcalins émanant de la maçonnerie.

10. Papier peint selon la revendication 9, caractérisé en ce que la couche de matière synthétique se compose de chlorure de polyvinyle.

11. Papier peint selon l'une quelconque des revendications 1 à 10, caractérisé en ce que la couche protectrice (3) a une épaisseur d'environ 0,5 $\mu$m.

# FIG. 1

# FIG. 2

# FIG. 3